# EUROPÄISCHE PATENTSCHRIFT

(11) **EP 0 365 762 B1**
(45) Veröffentlichungstag und Bekanntmachung des Hinweises auf die Patenterteilung: **04.05.1994**
(21) Anmeldenummer: 89113758.0
(22) Anmeldetag: 26.07.1989
(51) Int. Cl.: G02B 6/44

(54) **Lichtwellenleiterkabel**
Optical cable
Câble optique

(30) Priorität: 28.10.1988 DE 3836706
(43) Veröffentlichungstag der Anmeldung: 02.05.1990
(73) Patentinhaber: KABEL RHEYDT Aktiengesellschaft, D-41179 Mönchengladbach (DE)
(72) Erfinder: Haag, Helmut, D-5177 Titz 1 (DE); Hög, Georg, D-4050 Mönchengladbach 2 (DE); Hoffart, Michael, D-5628 Heiligenhaus (DE); Ropertz, Berndt, D-4050 Mönchengladbach 6 (DE); Thönnessen, Günter, Dr., D-4019 Monheim (DE)
(74) Vertreter: Mende, Eberhard, Dipl.-Ing.

(56) Entgegenhaltungen:
- EP-A- 0 146 757
- DE-A- 3 224 597
- PROCEEDINGS OF THE 27TH INTERNATIONAL WIRE & CABLE SYMPOSIUM, Band 27, 1978, Zeilen 404-410; T.S. SWIECICKI et al.: "Unit core cable structures for optical communications systems"

## Beschreibung

LWL-Kabel werden beispielsweise als Luftkabel für die Elektrizitätsversorgung verwendet. LWL ist die Abkürzung für Lichtwellenleiter. Im speziellen Fall eines LWL-Erdseilluftkabels dienen die Lichtwellenleiter als Erdseil.

Es gibt seit langer Zeit Luftkabel mit metallischer Armierung (Erdseil-Luftkabel) mit Cu-Leitern. Davon wurden LWL-Luftkabel abgeleitet, indem die Cu-Leiter durch LWL-Adern ersetzt wurden. Der Kern solcher Luftkabel besteht somit aus einer LWL-Seele mit einem mehr oder weniger dicken PE-Mantel. Dieser Kern hat einen Durchmesser von 6 bis 10 mm. Über dem Kern werden eine oder mehrere Lagen Drähte (rund oder segmentiert) verseilt. Die zugkraftaufnehmenden Stahl- oder aluminiumummantelten Stahldrähte (Stalum) sind in der äußersten oder zweiten Lage von außen angeordnet, um einen sicheren Kraftschluß zur Spiralarmatur zu gewährleisten. Der Nachteil solcher Luftkabel besteht darin, daß im Inneren des Luftkabels für die LWL-Seele 30 bis 80 mm² Querschnitt leitungsbezogen nutzlos verschwendet werden und infolgedessen die Kabel 3 bis 7 mm dicker sind als Leiterseile mit dem gleichen tragenden/leitenden Querschnitt.

Bekannt ist bereits eine flexible Starkstromleitung mit auf einen sternförmigen Kernstrang aufgeseilten Adern (DE-OS 32 24 597), die zusätzlich optische Übertragungselemente enthält. Diese sind im Innern der Schutzleiter angeordnet, welche sich in den Zwickeln zwischen den Energieadern befinden. Eingebettet sind Energieadern und die LWL-Adern enthaltenden Schutzleiter in der Masse des Innenmantels.

Bei einem gattungsgemäßen Luftkabel (EP-A-146 757) hat man auch schon die optischen Elemente, nämlich einzelne Fasern oder Faserbündel in Nuten eines Kernstranges eingelegt, dieser Kernstrang ist jedoch von einem zusätzlichen metallischen Schutzrohr umgeben, auf das die erste Lage der Einzeldrähte des Luftkabels aufgeseilt sind.

Der Erfindung liegt die Aufgabe zugrunde, die Durchmesserzunahme durch den nur übertragungstechnisch relevanten LWL-Teil so gering wie möglich zu halten und die Fasern der LWL-Adern sicher vor Umgebungseinflüssen wie Zug und Druck zu schützen. Diese Aufgabe wird bei einem LWL-Kabel mit einem Kern, LWL-Adern und elektrischen Leitern nach der Erfindung durch das Kennzeichen des Anspruchs 1 gelöst.

Die verschiebungsfreie Anordnung der Elemente der ersten Lage auf dem Umfang ist gleichbedeutend damit, daß die Elemente der dem Kern benachbarten Lage senkrecht zur Kabelachse verschiebungsfrei angeordnet sind.

Die Erfindung gewährleistet eine sichere Befestigung der Luftkabel an Trag- und Abspannmasten mittels Spiralarmaturen, d. h. den Stahlanteil möglichst weit nach außen zu bringen. Außerdem ermöglicht die Erfindung eine möglichst gleiche Lösung für Luftkabel mit 2 bis 12 LWL sowie eine sichere Muffenmontage, d. h. ein einfaches Trennen des oder der LWL-Teile vom Seil.

Geht man davon aus, daß bei einem LWL-Kabel nach der Erfindung für je maximal 3 Fasern eine LWL-Ader von 2 mm Durchmesser ausreichend ist, dann beträgt die erforderliche Querschnittszunahme für ein 12-faseriges Luftkabel z. B. 12,5 mm². Bei einem leitungstechnisch erforderlichen Querschnitt von z. B. 150 mm² bedeutet das eine Querschnittsvergrößerung von 8 % gegenüber den bisher bekannten Luftkabeln von 20 - 52 %, also eine Durchmesserzunahme von 4 % gegenüber 10 - 23 %. Bei einem Seilquerschnitt von 300 mm² (Al/St 265/35) sind es sogar nur noch 2 % Durchmesserzunahme. Das heißt, ein Luftkabel hätte gegenüber dem vergleichbaren Seil einen Durchmesser von 20,4 mm gegenüber 20,0 mm. Der geschilderte Vorteil wird bei der Erfindung dadurch erreicht, daß Leitungsseilelemente - wie Runddrähte und Profildrähte - die Lagefixierung und den Schutz der LWL-Adern übernehmen.

Die Erfindung wird im folgenden an Ausführungsbeispielen erläutert.

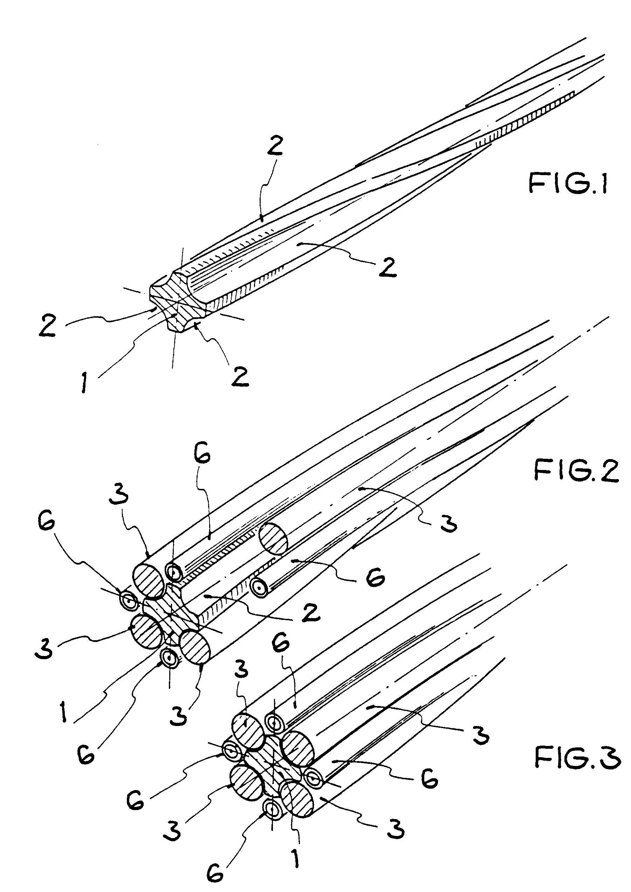

Die Figur 1 zeigt den Kern 1 eines LWL-Kabels, der nach der Erfindung strukturiert ist und als Struktur Hohlkehlen bzw. Nuten 2 zur Aufnahme von elektrischen Drähten aufweist, die der Stromversorgung dienen. Den Kern 1 des Luftkabels bildet beispielsweise ein Profildraht aus Aluminium. In die Nuten 2 werden als erste Lage gemäß der Figur 2 Drähte 3 eingelagert, die z. B. aus Aluminium, Aluminiumlegierung (Aldrey) oder aluminiumummanteltem Stahl (Stalum) bestehen. Die Drähte 3 werden durch die Nuten 2 fixiert.

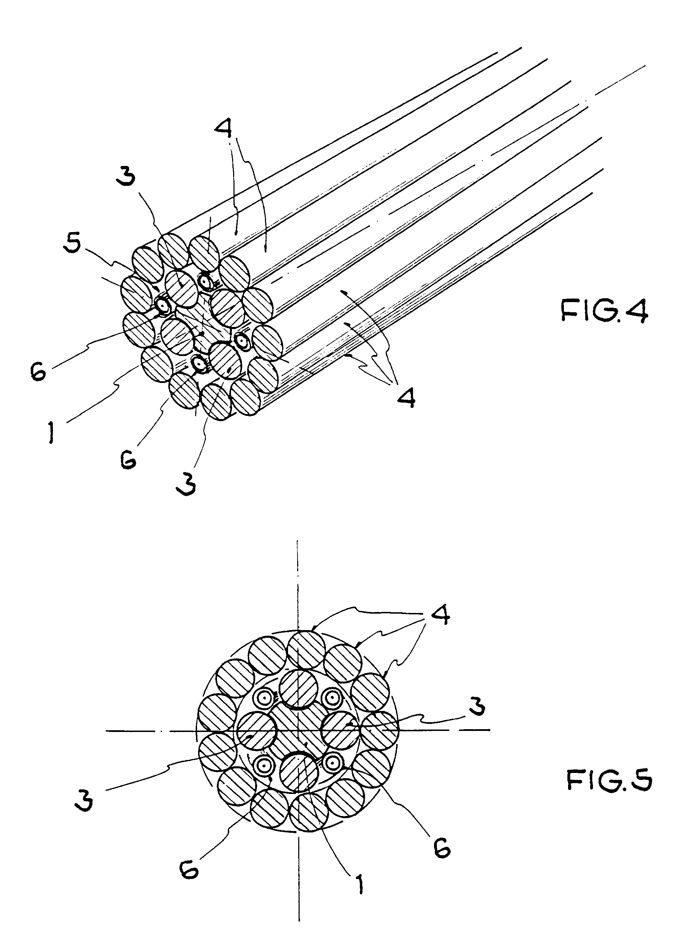

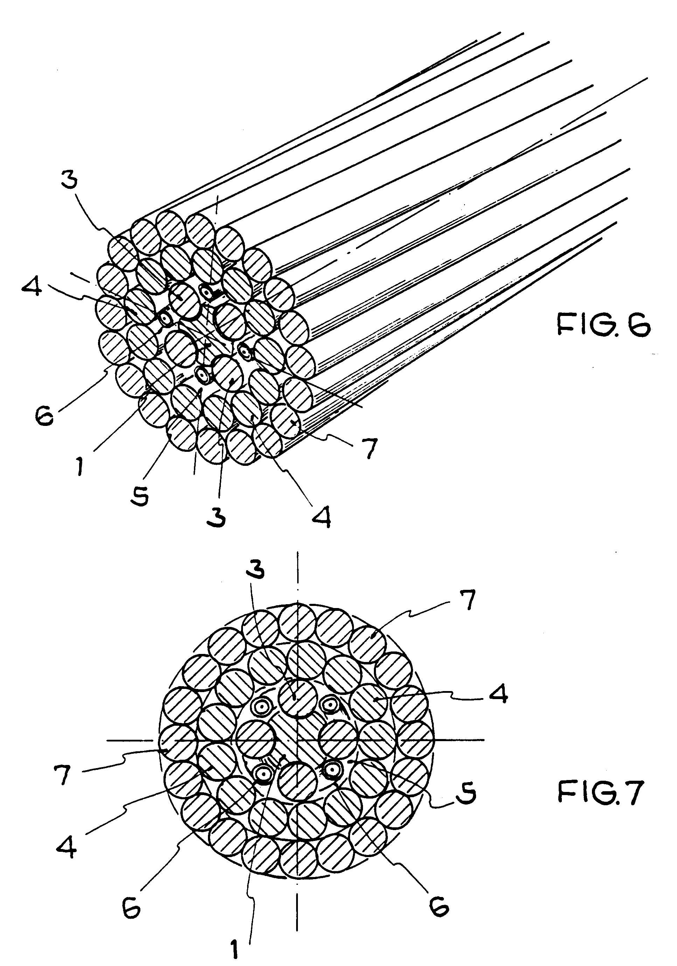

Durch den Kern 1, die Drähte 3 sowie durch die Drähte 4 der zweiten Lage (Figuren 4 und 5) werden Kammern 5 gebildet, in die LWL-Adern 6 (Hohl/Bündeladern) eingelegt werden. Die Durchmesser der LWL-Adern 6 und der Drähte 3 der ersten Lage sowie der Durchmesser des Kernes 1 und die Tiefe sowie die Kehlung des Kerns 1 sind so aufeinander abgestimmt, daß im fertigen Zustand der Umkreis, der durch die Drähte 3 der ersten Lage gebildet wird, die LWL-Adern 6 nicht bzw. nur leicht fixierend berührt. Um die Faserbeweglichkeit über den erforderlichen Stauch- und Dehnungsbereich zu gewährleisten und gleichzeitig eine Flexibilität dieser inneren Seele zu ermöglichen, sind die Drähte 3 der ersten Lage und damit auch die Nuten 2 des Kernes 1 spiralig mit einem Schlaglängenverhältnis von 6 bis 12 ausgeführt.

Die Drähte 4 der über der ersten Lage befindlichen zweiten Lage sowie die Drähte (7) gegebenenfalls weiterer Lagen (Figuren 6 und 7) werden jeweils in Gegenrichtung zu den Drähten der darunter befindlichen Lage aufgebracht. Das Schlaglängenverhältnis der zweiten Lage bzw. weiterer Lagen richtet sich nach DIN 41200 und liegt in der Größenordnung von 10 bis 15. Im Ausführungsbeispiel der Figuren 4 und 5 bilden der Kern 1 die Drähte 3 der ersten Lage und die Drähte 4 der zweiten Lage sichere stabile Kammern 6 für die LWL-Adern 7.

Im Ausführungsbeispiel besteht die erste Lage aus vier elektrischen Drähten 3. Die Anordnungen der Figuren 2 und 3 unterscheiden sich lediglich dadurch voneinander, daß bei der Anordnung der Figur 2 zur Verdeutlichung Teile der LWL-Adern 6 sowie der elektrischen Drähte 3 weggelassen sind, um die Hohlkehlen 2 sichtbar zu machen.

Die Figuren 6 und 7 zeigen noch eine zusätzliche dritte Lage mit den Drähten 8. Die Drähte der einzelnen Lagen können unterschiedliche Durchmesser haben.

## Patentansprüche

1. Elektrisches Luftkabel mit einer ersten Lage auf einem Kernprofil (1) aufgeseilter Leiter (3) und mit im Verseilverband der Leiter angeordneten Lichtwellenleiter-Adern (6), dadurch gekennzeichnet, daß zur verschiebungsfreien Lagerung der auf das Kernprofil (1) aufgeseilten Leiter (3) in Umfangsrichtung dieses an seiner äußeren Umfangsfläche wendelförmig entlang der Kabelachse verlaufende Hohlkehlen (2) zur Aufnahme der Leiter (3) aufweist, daß die in benachbarten Hohlkehlen (2) festgelegten Leiter (3) mit den Leitern (4) einer zweiten, anschließenden Lage und mit einer von Leitern freien Oberfläche des Kernprofils (1) längs der Kabelachse verlaufende Kammern bilden, in denen die Lichtwellenleiter-Adern (6) aufgenommen sind.

2. Luftkabel nach Anspruch 1, dadurch gekennzeichnet, daß die Leiter der zweiten Lage gegenüber der ersten, auf dem Kernstrang aufliegenden Lage eine entgegengesetzte Schlagrichtung zur Bildung der die LWL-Adern aufnehmenden Kammern aufweisen.

## Claims

1. Electrical aerial cable having a first layer on a core profile (1) of stranded conductors (3) and having optical fibres (6) arranged in the stranded assembly of the conductors, characterized in that, for the purpose of non-displaceably mounting the conductors (3) stranded onto the core profile (1), in the circumferential direction said profile has grooves (2) which accommodate the conductors (3) and extend on the outer circumferential surface of said core profile in a helical fashion along the cable axis, and in that together with the conductors (4) of a second, adjoining layer and with a surface of the core profile (1) free from conductors the conductors (3) fixed in adjacent grooves (2) form chambers extending along the cable axis in which the optical fibres (6) are accommodated.

2. Aerial cable according to Claim 1, characterized in that with respect to the first layer resting on the core strand the conductors of the second layer have an opposite direction of lay for the purpose of forming the chambers accommodating the optical fibres.

## Revendications

1. Câble électrique aérien comportant une première couche de fils (3) câblés sur une âme profilée (1) ainsi que des conducteurs à guides d'ondes lumineuses (6) disposés dans le groupement câblé des fils, câble caractérisé par le fait que, pour permettre une mise en place, avec liberté de glissement des fils câblés sur l'âme profilée (1), selon la direction périphérique, cette âme présente, pour recevoir les fils (3), des cannelures creuses (2) orientées, sur sa surface périphérique extérieure, en forme de spirale le long de l'axe du câble, par le fait que les fils (3), établis dans les cannelures creuses voisines (2), forment avec les fils (4) d'une seconde couche, voisine, et avec la surface de l'âme profilée (1) qui ne contient pas de fils, des chambres qui sont orientées selon l'axe du câble et dans lesquels sont logés les conducteurs à guides d'ondes lumineuses (6).

2. Câble électrique aérien selon la revendication 1, caractérisé par le fait que les fils (4) de la seconde couche présentent, par rapport à ceux de la première couche, qui reposent sur l'âme, un sens d'hélice opposé, de façon à former des chambres recevant les conducteurs à guides d'ondes lumineuses.
